# EUROPÄISCHE PATENTSCHRIFT

(11) **EP 0 665 313 B1**
(45) Veröffentlichungstag und Bekanntmachung des Hinweises auf die Patenterteilung: **11.07.2001**
(21) Anmeldenummer: 95100196.5
(22) Anmeldetag: 09.01.1995
(51) Int. Cl.: D03D 1/02, B60R 21/16

(54) **Verfahren zur Herstellung von beschichtungsfrei ausgebildeten Geweben und seine Verwendung bei der Herstellung von Airbags**
Process for the manufacture of uncoated fabrics and its use for manufacturing airbags
Procédé pour la fabrication de tissus non enduits ainsi que son utilisation pour la fabrication de coussins gonflables

(30) Priorität: 17.01.1994 DE 4401003
(43) Veröffentlichungstag der Anmeldung: 02.08.1995
(73) Patentinhaber: ARTEVA TECHNOLOGIES S.à.r.l., 8001 Zürich (CH)
(72) Erfinder: Höhnke, Gerhard, D-86399 Bobingen (DE)
(74) Vertreter: Zounek, Nikolai, Dipl.-Ing.

(56) Entgegenhaltungen:
- EP-A- 0 442 373
- EP-A- 0 523 546

## Beschreibung

Die vorliegende Erfindung betrifft ein Verfahren zur Herstellung von beschichtungsfrei ausgebildeten Geweben und deren Verwendung bei der Herstellung von Airbags.

Airbags werden zunehmend als Sicherheitseinrichtung in Kraftfahrzeugen eingesetzt. Ein Airbag hat die Aufgabe, sich bei einer Gefahrensituation durch sehr schnell einströmendes Gas zu einem Ballon zu entfalten, der aufgrund des darin herrschenden Überdrucks den Druck eines dagegengeschleuderten Körpers wirksam aber weich abfangen kann. Danach soll der schützende Ballon aber möglichst schnell zusammenfallen, damit er weitere Aktionen der geschützten Person nicht behindert.

Ein Airbag braucht daher eine sehr genau geplante Charakteristik des zeitlichen Druck-Auf-und Abbaus was dadurch erreicht werden kann, daß in eine insgesamt gasundurchlässige Hülle des Airbags voreingestellte Auslaßventile eingebaut sind oder daß ein Teil seiner Hülle, der sogenannte Mantel, gasdicht ist, während die Seitenteile eine geplante Gasdurchlässigkeit aufweisen.

Wichtige Anforderungen an das Gewebe eines derartigen Airbags sind eine gezielt eingestellte Luftdurchlässigkeit, ein geringes Gewebegewicht und eine kleine Gewebedicke (für eine platzsparende Unterbringung im Kraftfahrzeug) sowie eine hohe Gewebe-Höchstzugkraft und eine ausreichende Höchstzugkraftdehnung (für die Arbeitsaufnahme beim explosionsartigen Entfalten des Airbags).

Die in der Praxis derzeit eingesetzten Airbags bestehen überwiegend aus einem gummierten Polyamidgewebe, wobei die Gummierung die geringe Luftdurchlässigkeit sicherstellt. Ein derartiges beschichtetes Gewebe ist zum Beispiel in der DE-A-2,317,991 beschrieben.

Eine Gummierung des Polyamidgewebes macht die Herstellung des Airbags aufwendig und teuer und führt zu einem erhöhten Platzbedarf des gefalteten Airbags. Auch neigen diese Polyamidgewebe wegen der Gummierung zu einer Versprödung, was die Lebensdauer des Airbags herabsetzt.

Aus der EP-A-314,867 ist ein unbeschichtetes Polyamidgewebe für einen Airbag bekannt, bei dem die geringe Luftdurchlässigkeit durch Schrumpfen, Thermofixieren sowie Kalandrieren des Gewebes erreicht werden soll. In dieser Veröffentlichung wird erwähnt, daß statt Polyamidfäden auch Fäden aus Polyester, Aramiden, PPS, Polyimiden und dgl. verwendet werden können. Das dort beschriebene Gewebe hat eine Leinwandbindung mit 34 Kettfäden/cm aus dtex 470 und 16 Schußfäden/cm aus dtex 470. Das vorgesehene Schrumpfen und Thermofixieren sowie Kalandrieren des Gewebes verteuern als zusätzliche Verfahrensschritte die Herstellung des Airbags.

Aus der EP-A-523,546, die als nächstgelegener Stand der Technik angesehen wird, ist ein technisches Gewebe mit gezielt eingestellter Luftdurchlässigkeit und sehr guter Alterungsbeständigkeit bekannt, das besonders für die Herstellung von Airbag Geweben geeignet sein soll. Diese Gewebe erhält seine Eigenschaften erst nach genau aufeinander abgestimmten Produktionsbedingungen in der Weberei, einer speziellen Naßbehandlung und Heißluftbehandlung. Die Naßbehandlung erfolgt bei Temperaturen von 60 bis 140 °C und die Heißluftbehandlung wird auf einem Spannrahmen mit einer Voreilung von 3 bis 5 % durchgeführt. Für Polyestergewebe ist eine zweistufige Wärmebehandlung notwendig, Trocknen bei 150 °C und anschließend ein Fixierprozeß bei einer Fixiertemperatur von etwa 190 °C. Polyestergewebe müssen nach dem dort beschriebenen Verfahren durch Heißluftbehandlung unter Schrumpfauslösung fixiert werden.

Ferner ist aus der DE-A-4,000,740 ein Verfahren zur Herstellung eines unbeschichteten Airbag Gewebes bekannt, das aus Synthese-Filamentgarnen mit einem Heißluftschrumpf bei 160 °C von mindestens 8 % besteht und eine wenigstens im wesentlichen symmetrische Gewebeeinstellung aufweist. Zur Einstellung der geforderten Luftduchlässigkeit wird das Gewebe einer Behandlung in einem wässrigen Bad bei 60 bis 140 °C unterzogen und ein Schrumpf ausgelöst, der zu einer weiteren Verdichtung des Gewebes führt. Die anschließende Trocknung der Gewebe erfolgt bei Temperaturen von 130 bis 170 °C. Das Gewebe selbst ist unbeschichtet und erhält im Gegensatz zu den bereits eingesetzten Geweben seine endgültigen Eigenschaften erst durch die Naßausrüstung und Heißluftbehandlung.

Auf die Verfahrensschritte Schrumpfen, wie Waschen, Thermofixieren, Kalandrieren und Beschichten kann bei dem aus der EP-A-442,373 bekannten Gewebe aus synthetischem Polyestergarn verzichtet werden. Dieses Gewebe ist aus Garnen mit Einzeltitern von kleiner gleich 4 dtex und Garntitern von 250 bis 550 dtex aufgebaut. Ein Vorteil dieses Gewebes besteht darin, daß seine Festigkeitseigenschaften und seine Luftdurchlässigkeit bereits beim Weben festgelegt sind.

Der Erfindung liegt die Aufgabe zugrunde, ein Verfahren zur Herstellung von beschichtungsfrei ausgebildeten Geweben, die verbesserte Drapierfähigkeit besitzen und deren Verwendung bei der Herstellung von Airbags zu schaffen.

Die Aufgabe wird durch ein Verfahren zur Herstellung von beschichtungsfrei ausgebildeten Geweben aus synthetischem Garn für einen Airbag gelöst, umfassend die Maßnahmen:
a) Herstellung eines Gewebes aus hochfestem Polyesterfilamentgarn eines Einzeltiters von kleiner gleich 5 dtex, eines Garntiters im Bereich von 250 bis 550 dtex, eines Thermoschrumpfes bei 200 °C von weniger als 9 % und eines Kochschrumpfes von weniger als 2 %,
b) Waschen des Gewebes bei Temperaturen von weniger als 60 °C, und
c) Trocknen des gewaschenen Gewebes bei Temperaturen von weniger als 170 °C unter solchen Bedingungen, daß die Dimensionen des Gewebes, bezogen auf die Dimensionen des Gewebes vor dem Waschen, in Kett- und Schußrichtung nicht oder um weniger als 2 % veränder werden. In weiterer Ansgestaltung des Verfahrens erfolgt das Trocknen des gewaschenen gewebes durch Behandlung in einem Spannrahmen mit einer Voreilung von weniger als 2 % und einem Breiteneinsprung von weniger als 2 %.

Wie sich überraschenderweise gezeigt hat, wird durch die Verwendung eines feinkapillarigen hochfesten Polyesterfilamentgarnes eines Einzeltiters von 5 dtex oder weniger und eines Garntiters im Bereich von 250 bis 550 dtex ohne besondere Gewebenachbehandlung wie Schrumpfen, Thermofixieren oder Kalandrieren ein Airbag-Gewebe geschaffen, das bereits ohne Beschichtung und Gummierung die erforderlichen Eigenschaften, insbesondere eine geringe Luftdurchlässigkeit besitzt. Das Gewebe zeichnet sich somit durch besonders einfache Herstellbarkeit aus. Wegen der fehlenden Gummierung ist die Gefahr einer Versprödung nicht gegeben, was sich entsprechend günstig auf die Lebensdauer auswirkt. Die spezielle Auswahl des Filamentmaterials und des erfindungsgemäßen Wasch- und Trocknungsprozesses führen zu einem dichten Gewebe, das eine hohe Drapierfähigkeit aufweist.

Vorzugsweise besitzt das eingesetzte Polyestergarn eine feinheitsbezogene Höchstzugkraft von mehr als 60 cN/tex und eine Höchstzugkraft-Dehnung von mehr als 15 %. Gut geeignet für die Herstellung des Gewebes ist ein Garn aus Polyethylenterephthalat z.B. ein handelsübliches Polyestergarn ® TREVIRA HOCHFEST der Firma Hoechst AG.

Zur geringen Luftdurchlässigkeit des Gewebes tragen insbesondere die feinen Einzeltiter der gedrehten Kettgarne und gedrehten oder ungedrehten Schußgarne aus hochfesten Polyesterfilamentgarnen bei. Die gedrehten Schußgarne aus hochfesten Polyesterfilamentgarnen haben eine Drehung, die vorzugsweise im Bereich von 80 bis 130T/m liegt. Der feine Garntiter führt zu einem niedrigen Gewebegewicht und einer geringen Gewebedicke. Die Luftdurchlässigkeit des Gewebes liegt bevorzugt unter 10 l dm⁻² min⁻¹ für den gasdichten Teil und unter 100 l dm⁻² min⁻¹ für den gasdurchlässigen Teil des Airbags, gemessen bei einer Druckdifferenz von 500 Pa. Das Flächengewicht des Gewebes beträgt vorzugsweise weniger als 250 g/m² und die Gewebedicke vorzugsweise weniger als 0,45 mm.

Die Höchstzugkraft des Gewebes sollte vorzugsweise mehr als 250 daN und die Höchstzugkraftdehnung des Gewebes mehr als 22 %, jeweils gemessen an einem 5 cm breiten Gewebestreifen, betragen. Diese Festigkeits- und Dehnungswerte stellen sicher, daß das Gewebe für die Arbeitsaufnahme bei dem explosionsartigen Aufweiten des Airbags geeignet ist.

Für den erfindungsgemäßen Zweck können Gewebe unterschiedlichster Gewebebindung, wie z. B. eine Leinwandbindung 1/1 eingesetzt werden. Zur gezielten Modifizierung der Gewebe können jedoch Varianten, wie z.B. eine Ripstopbindung, eine Kreuzköperbindung, eine Krepp- oder modifizierte Gerstenkornbindung bevorzugt sein.

Die weitere Ausgestaltung des Verfahrens ergibt sich aus den Ansprüchen 10 bis 16.

Um eine möglichst geringe Luftdurchlässigkeit zu erzielen, wie es insbesondere für den Mantelbereich des Airbags erwünscht ist, sollte das Gewebe eine - für den gewählten Garntiter und die gewählte Gewebekonstruktion - maximal dichte Gewebeeinstellung besitzen, d.h., das Gewebe soll die beim Weben maximal mögliche Fadenzahl pro Längeneinheit in Kett- und Schußrichtung erhalten soll.

Für ein Gewebe mit Leinwandbindung 1/1, beispielsweise aus einem 470 dtex - Polyestergarn, werden zweckmäßigerweise 18 bis 24 Fäden/cm, beispielsweise 22 Fäden/cm, in Kette und Schuß eingestellt.

Bei niedrigerem Garntiter wird eine entsprechend höhere, bei größeren Garntitern eine entsprechend niedrigere Fadenzahl/cm eingestellt, um die geringe Luftdurchlässigkeit zu erreichen.

Die Gewebeeigenschaften werden durch die eingesetzten Garne und den Webprozeß weitgehend festgelegt. Der Wasch- und Trockenprozeß verbessert dann erfindungsgemäß die Drapierbarkeit.

In einer besonders bevorzugten Ausführungsform der Erfindung wird ein Gewebe mit einer Ripstopbindung und einer maximal dichten Gewebeeinstellung eingesetzt. Derartige Gewebe eignen sich insbesondere zur Anfertigung des Airbag-Mantels.

Weiterhin ist es hierbei bevorzugt, wenn nach je 3 bis 15 mm ein Mehrfachgarn folgt. Besonders zweckmäßig ist ein Abstand von ca. 4,5 bis 5,5 mm zwischen den Mehrfachgarnen und die Wahl eines Doppelgarns als Mehrfachgarn.

Hat der Airbag einen gasabführenden Gewebeteil, so wird die Fadeneinstellung entsprechend der erforderlichen größeren Luftdurchlässigkeit verringert. Abweichend vom gasdichten Teil können zur Verbesserung der Schiebefestigkeit andere Gewebebindungen eingesetzt werden, wie z.B. Kreuzköper- oder Kreppbindungen und modifizierte Gerstenkornbindungen, wie in der EP-A-509,399 beschrieben.

In weiterer Ausgestaltung der Erfindung wird ein Gewebe aus gedrehten Kettgarnen und ungedrehten Schußgarnen eingesetzt. Derartige Gewebe lassen sich insbesondere als gasdichter Teil (Mantelteil) von Airbags einsetzen.

In weiterer Ausgestaltung der Erfindung wird ein Gewebe aus gedrehten Kettgarnen und ungedrehten oder gedrehten Schußgarnen eingesetzt. Derartige Gewebe lassen sich insbesondere als gasabführender Teil von Airbags einsetzen.

Die Drehung der Garne liegt vorzugsweise je nach Garntiter im Bereich von 80 bis 130T/m, z.B. bei etwa 90T/m bei 470 dtex.

Zur Herstellung des erfindungsgemäß einzusetzenden Gewebes wird ein ungeschlichtetes Polyestergarn mit einem Thermoschrumpf bei 200°C von weniger als 9 %, vorzugsweise weniger als 7,5 % verwendet.

Wie bereits erwähnt, ist bei dem erfindungsgemäß einzusetzenden Gewebe ein Schrumpfen und Thermofixieren nicht erforderlich. Diese Maßnahmen werden daher unterlassen. Im Hinblick auf die geringe Gewebedicke ist auch ein Kalandrieren nicht notwendig.

Zur Erhöhung der Drapierfähigkeit des Gewebes und zum Erzielen eines ansprechenden Warengriffes wird das Gewebe einem Wasch- und Trocknungsprozeß bei niedrigen Temperaturen unterzogen.

Die Waschbehandlung erfolgt bei Temperaturen von kleiner als 60 °C, vorzugsweise 40 bis 50 °C.

Die Wäsche kann mit organischen Lösungsmitteln oder insbesondere mit Wasser durchgeführt werden. Wasser kann gegebenenfalls waschaktive Zusätze enthalten. Mit der Wäsche werden insbesondere von der Garnherstellung auf den Garnen eventuell noch vorhandene Präparationsrückstände vom Gewebe entfernt. Zum Durchführen der Wäsche können an sich für die Breitwäsche übliche Vorrichtungen eingesetzt werden, beispielsweise Kontinue-, oder Breitwaschmaschinen oder auch Jigger. Behandlungszeiten und gegebenenfalls Zusätze werden so ausgewählt, daß das behandelte Gewebe weitgehend präparationsfrei ist.

In einer besonders einfachen Ausführungsform kann der Waschvorgang auch durch eine Foulard-Wasserpassage im Überlauf ersetzt werden, wobei üblicherweise dieser Foulard dem Spannrahmen unmittelbar vorgeschaltet ist, wobei die Präparation nicht vollständig entfernt werden muß.

An die Wäsche schließt sich eine Trocknungsbehandlung an. Dazu wird das Gewebe bei Temperaturen von kleiner gleich 170 °C, vorzugsweise 140 bis 165 °C getrocknet. Die Trocknung ist so durchzuführen, daß die Dimensionen des Roh-Gewebes sich praktisch nicht verändern bzw. praktisch wieder erreicht werden. Zu diesem Zweck wird das Gewebe während des Trocknungsvorganges so in einem Spannrahmen geführt, daß praktisch keine Voreilung und praktisch kein Breiteneinsprung auftreten. Dazu wird mit einer Voreilung von weniger als 2 % und einem Breiteneinsprung von weniger als 2 % gearbeitet.

Besonders bevorzugt wird mit einer Voreilung von 0 bis 1 %, und mit einem Breiteneinsprung von 0 bis 1 %, gearbeitet.

Dies kann auf allen Trocknungsaggregaten durchgeführt werden, auf denen die Breite gehalten werden kann, bevorzugt auf Spannrahmen.

Geeignete Spannrahmen für die Durchführung des Trocknungsvorganges sind allgemein bekannt. Solche Vorrichtungen sind beispielsweise in Koch/Satlow "Großes Textil-Lexikon", Deusche Verlags Anstalt, Stichwort "Spannrahmen" beschrieben.

Wie bereits ausgeführt, lassen sich durch das erfindungsgemäße Verfahren Gewebe mit ausgezeichneter Drapierfähigkeit herstellen. Als ein Maß dafür läßt sich z.B. die Biegelänge, gemessen im Biegesteifigkeitstest nach DIN 53362, heranziehen. Es wurde beispielsweise gefunden, daß sich ein erfindungsgemäß hergesteltes Gewebe von 230 g/m² durch eine Biegelänge von kleiner gleich 70/110 mm (Kette/Schuß) auszeichnet.

Die Ermittlung der Biegelänge erfolgt nach DIN 53362 durch Auflegen einer fadengerade ausgestanzten Probe von 25 mm Breite und 250 mm Länge auf ein Biegesteifigkeits Prüfgerät. Anschließend wird die Probe auf dem Biegesteifigkeits Prüfgerät so weit nach vorn bewegt, bis sie unter ihrem Eigengewicht so weit durchgebogen ist, daß ihr Ende die abgeschrägte Seitenfläche des Prüfgeräts wieder berührt. Die Biegelänge entspricht der freien Länge des überhängenden Teils der Probe.

Ein weiterer Gegenstand dieser Erfindung ist auch die Verwendung des Gewebes bei der Herstellung von Airbags, insbesondere solche, bei der ein gasdichter und ein gasabführender Gewebeteil vorgesehen sind, die im wesentlichen aus den oben beschriebenen, unbeschichteten und ungummierten und ungeschlichteten und unfixierten und bevorzugt auch unkalandrierten Geweben aufgebaut sind.

Bei einer bevorzugten Ausführungsform besteht der gasdichte Gewebeteil aus einem Gewebe mit maximal dichter Gewebeeinstellung, insbesondere mit Ripstopbindung, wobei vorzugsweise nach je 3 bis 15 mm ein Mehrfachgarn folgt. Besonders zweckmäßig ist ein Abstand von ca. 4,5 bis 5,5 mm zwischen den Mehrfachgarnen und die Wahl eines Doppelgarns als Mehrfachgarn.

Bei einer weiteren bevorzugten Ausführungsform besteht der gasabführende Gewebeteil aus einem Gewebe, dessen Gewebeeinstellung offener als die des gasdichten Gewebeteils ist und der vorzugsweise eine Kreuzköperbindung aufweist.

Es sind ferner solche Airbags bevorzugt, bei denen das gasdichte Gewebe aus gedrehten Kettgarnen und ungedrehten Schußgarnen, das gasabführende Gewebe dagegen aus gedrehten Kett- und Schußgarnen besteht.

Besonders bevorzugte Ausführungsformen der Erfindung sind diejenigen die eine Kombination mehrerer der oben genannten, bevorzugten Merkmale aufweisen.

Es hat sich ferner als vorteilhaft erwiesen, wenn eine Leinwandbindung 1/1, vorzugsweise aber für das gasdichte Material eine Ripstopbindung, für das gasabführende Material eine Kreuzköperbindung gewebt wird.

Weiterhin ergeben sich dann Vorteile, wenn bereits beim Weben die Maschineneinstellung so erfolgt, daß sich die weiteren, oben genannten bevorzugten Gewebeparameter ergeben. Der Wasch- und Trocknungsprozeß verbessert dann die Drapierfähigkeit unter Erhalt der mechanischen Eigenschaften und der Luftdurchlässigkeit.

Die Herstellung eines Airbags, bei dem ein gasdichter und ein gasabführender Gewebeteil vorgesehen sind, erfolgt durch Zusammensetzen geeignet zugeschnittener Gewebebahnen in an sich bekannter Weise und ist dadurch gekennzeichnet, daß für den gasdichten Gewebeteil ein Gewebe, wie oben definiert, mit maximal dichter Gewebeeinstellung und für den gasabführenden Gewebeteil ein Gewebe, wie oben definiert, dessen Gewebeeinstellung offener als die des gasdichten Gewebeteils ist, eingesetzt wird.

Die Herstellung weiterer, besonders bevorzugter Ausführungsformen des Airbags erfolgt durch Verwendung von oben beschriebenen Geweben mit einer Kombination bevorzugter Eigenschaften, beispielweise durch Einsatz eines gasdichten Mantelgewebes mit Ripstopbindung und eines gasabführenden Gewebes mit einer Kreuzköperbindung.

### Beispiel

Zur Herstellung eines unbeschichteten Gewebes für einen Fahrer-Airbag wurde ein Polyesterfilamentgarn ^{R}TREVIRA HOCHFEST 470 dtex f100 verwendet. Dieses Garn hatte folgende Eigenschaften:

| | |
|---|---|
| Höchstzugkraft | 8,1 daN |
| feinheitsbezogene Höchstzugkraft | 66,8 cN/tex |
| Höchstzugkraft-Dehnung | 21,5 % |
| Thermoschrumpf bei 200 °C | 7,4 % |
| Schmelzpunkt | 257 °C |

Dieses Garn wurde mit einer Ripstop-Bindung (5 mm) mit 22/22 Fäden/cm verwebt, wobei in der Kette ^{R}TREVIRA HOCHFEST 470 dtex f100 VZ 90 und im Schuß ^{R}TREVIRA HOCHFEST 470 dtex f100 VO eingesetzt wurde. Unter Ripstop (5 mm) versteht man eine Bindung, bei der im Abstand von etwa 5 mm jeweils ein Doppelfaden in Kette und Schuß eingebracht wurde.

Die Daten des Rohgewebes waren:

| | |
|---|---|
| Flächengewicht | 229 g/m² |
| Gewebedicke | 0,39 mm |
| Höchstzugkraft | 297 daN (Kette) |
| (jeweils gemessen an einem 5 cm breiten Gewebestreifen) | 325 daN (Schuß) |
| | |
| Höchstzugkraft-Dehnung | 32 % (Kette) |
| (jeweils gemessen an einem 5 cm breiten Gewebestreifen) | 24 % (Schuß) |
| | |
| Weiterreißfestigkeit | 25 daN (Kette) |
| (Schenkelmethode nach DIN 53356) | 24 daN (Schuß) |
| | |
| Luftdurchlässigkeit bei 500 Pa | 6,6 l dm⁻² min⁻¹ |
| | |
| Biegelänge | 88 mm (Kette) |
| (gemessen nach DIN 53362) | 127 mm (Schuß) |

Das oben beschriebene Gewebe wurde bei 50 °C auf einer Kontinue-Breitwaschmaschine gewaschen und anschließend auf einem Spannrahmen bei 160 °C ohne Voreilung und Breiteneinsprung getrocknet. Es wurde ein flexibleres und weicheres Gewebe erzielt, ohne die sonstigen Gewebeeigenschaften wesentlich zu verändern. Dies zeigt die nachstehende Aufstellung:

| | |
|---|---|
| Flächengewicht | 232 g/m² |
| Gewebedicke | 0,38 mm |
| Höchstzugkraft | 309 daN (Kette) |
| (jeweils gemessen an einem 5 cm breiten Gewebestreifen) | 329 daN (Schuß) |
| | |
| Höchstzugkraft-Dehnung | 34 % (Kette) |
| (jeweils gemessen an einem 5 cm breiten Gewebestreifen) | 23 % (Schuß) |
| | |
| Luftdurchlässigkeit bei 500 Pa | 6,8 l dm⁻² min⁻¹ |
| | |
| Biegelänge | 68 mm (Kette) |
| (gemessen nach DIN 53362) | 108 mm (Schuß) |

## Patentansprüche

1. Verfahren zur Herstellung von beschichtungsfrei ausgebildeten Geweben aus synthetischem Garn für einen Airbag umfassend die Maßnahmen:
a) Herstellung eines Gewebes aus hochfestem Polyesterfilamentgarn eines Einzeltiters von kleiner gleich 5 dtex, eines Garntiters im Bereich von 250 bis 550 dtex, eines Thermoschrumpfes bei 200 °C von weniger als 9 % und eines Kochschrumpfes von weniger als 2 %,
b) Waschen des Gewebes bei Temperaturen von weniger als 60 °C, und
c) Trocknen des gewaschenen Gewebes bei Temperaturen von weniger als 170 °C unter solchen Bedingungen, daß die Dimensionen des Gewebes, bezogen auf die Dimensionen des Gewebes vor dem Waschen, in Kett- und Schußrichtung nicht oder um weniger als 2 % verändert werden.

2. Verfahren nach Anspruch 1, dadurch gekennzeichnet, daß das Trocknen des gewaschenen Gewebes durch Behandlung in einem Spannrahmen mit einer Voreilung von weniger als 2 % und einem Breiteneinsprung von weniger als 2 % erfolgt.

3. Verfahren nach Anspruch 1, dadurch gekennzeichnet, daß das Polyestergarn eine feinheitsbezogene Höchstzugkraft von mehr als 60 cN/tex und eine Höchstzugkraft-Dehnung von mehr als 15 % besitzt.

4. Verfahren nach Anspruch 1, dadurch gekennzeichnet, daß bei der Herstellung des Gewebes ein schlichtefreies hochfestes Polyesterfilamentgarn eingesetzt wird.

5. Verfahren nach Anspruch 1, dadurch gekennzeichnet, daß bei der Herstellung des Gewebes gedrehte Kettgarne und gedrehte oder ungedrehte Schußgarne aus hochfesten Polyesterfilamentgarnen eingesetzt werden.

6. Verfahren nach Anspruch 5, dadurch gekennzeichnet, daß bei der Herstellung des Gewebes gedrehte Schußgarne aus hochfesten Polyesterfilamentgarnen eingesetzt werden, wobei die Drehung der hochfesten Polyesterfilamentgarne vorzugsweise im Bereich von 80 bis 130/m liegt.

7. Verfahren nach Anspruch 1, dadurch gekennzeichnet, daß Gewebe mit einer Luftdurchlässigkeit unter 100 1 dm⁻² min⁻¹, insbesondere 10 l dm⁻¹ min⁻¹ gemessen bei einer Druckdifferenz von 500 Pa, hergestellt werden.

8. Verfahren nach Anspruch 1, dadurch gekennzeichnet, daß Gewebe mit einem Flächengewicht von weniger als 250 g/m² und einer Gewebedicke von weniger als 0,45 mm hergestellt werden.

9. Verfahren nach Anspruch 1, dadurch gekennzeichnet, daß Gewebe mit einer Höchstzugkraft von mehr als 250 daN und einer Höchstzugkraftdehnung von mehr als 22 %, beides gemessen an einem 5 cm breiten Gewebestreifen, hergestellt werden.

10. Verfahren nach Anspruch 1, dadurch gekennzeichnet, daß das Waschen des Gewebes bei Temperaturen von 40 bis 50 °C erfolgt.

11. Verfahren nach Anspruch 1, dadurch gekennzeichnet, daß das Waschen des Gewebes mit Wasser, das gegebenenfalls waschaktive Zusätze enthält, erfolgt.

12. Verfahren nach Anspruch 1, dadurch gekennzeichnet, daß das Trocknen des Gewebes bei Temperaturen von 140 bis 170 °C erfolgt.

13. Verfahren nach Anspruch 1, dadurch gekennzeichnet, daß das Trocknen des gewaschenen Gewebes unter solchen Bedingungen erfolgt, daß die Dimensionen des Gewebes, bezogen auf die Dimensionen des Gewebes vor dem Waschen, in Kett- und Schußrichtung um 0 bis 1 % verringert sind.

14. Verfahren nach Anspruch 2, dadurch gekennzeichnet, daß das Trocknen des gewaschenen Gewebes durch Behandlung in einem Spannrahmen mit einer Voreilung von 0 bis 1 % und einem Breiteneinsprung von 0 bis 1 % erfolgt.

15. Verfahren nach Anspruch 1, dadurch gekennzeichnet, daß das Gewebe eine Luftdurchlässigkeit von 10 | dm⁻² min⁻¹, gemessen bei einer Druckdifferenz von 500 Pa, und eine Leinwandbindung oder Ripstopbindung aufweist.

16. Verfahren nach Anspruch 1, dadurch gekennzeichnet, daß das Gewebe eine Luftdurchlässigkeit unter 100 l dm⁻² min⁻¹, gemessen bei einer Druckdifferenz von 500 Pa, und eine Kreuzköperbindung, eine Kreppbindung oder eine modifizierte Gerstenkornbindung aufweist.

17. Verwendung von Geweben, die gemäß dem Verfahren nach Anspruch 1 hergestellt sind, für Airbags.

18. Verwendung nach Anspruch 17, dadurch gekennzeichnet, daß bei dem Airbag zumindest ein gasdichter Gewebeteil vorgesehen ist, wobei dieser gasdichte Gewebeteil aus einem Gewebe mit Leinwandbindung oder Ripstopbindung und maximal dichter Gewebeeinstellung besteht.

19. Verwendung nach Anspruch 17, dadurch gekennzeichnet, daß bei dem Airbag zumindest ein gasdichter Gewebeteil vorgesehen ist, wobei dieser gasdichte Gewebeteil aus gedrehten Kettgarnen und ungedrehten Schußgarnen besteht.

20. Verwendung nach Ansprnch 17, dadurch gekennzeichnet, daß bei dem Airbag ein gasdichter und ein gasabführender Gewebeteil vorgesehen ist, wobei das gasabführende Gewebeteil aus gedrehten Kett- und Schußgarnen besteht.

## Claims

1. A process for producing uncoated woven fabrics from synthetic yarn for an airbag, comprising the measures of:
a) producing a woven fabric from high tenacity polyester filament yarn having a filament linear density of not more than 5 dtex, a yarn linear density within the range from 250 to 550 dtex, a hot air shrinkage at 200°C of less than 9% and a boil off shrinkage of less than 2%,
b) washing the fabric at temperatures of less than 60°C, and
c) drying the washed fabric at temperatures of less than 170°C under such conditions that the dimensions of the fabric, based on its dimensions prior to the washing step, do not change at all or by less than 2% in the warp and weft directions.

2. The process of claim 1 wherein the drying of the washed fabric takes place by treatment in a tenter with an overfeed of less than 2% and a widthways contraction of less than 2%.

3. The process of claim 1 wherein the polyester yarn has a tenacity of more than 60 cN/tex and a breaking extension of more than 15%.

4. The process of claim 1 wherein the high tenacity polyester filament yarn used for producing the woven fabric is size-free.

5. The process of claim 1 wherein the high tenacity polyester filament yarn used for producing the woven fabric comprises twisted warp yarns and twisted or zero twist weft yarns.

6. The process of claim 5 wherein the high tenacity polyester filament yarn used for producing the woven fabric comprises twisted weft yarns, the twist level of the high tenacity polyester filament yarn preferably being within the range from 80 to 130 turns/m.

7. The process of claim 1 wherein the woven fabric produced has an air permeability of below 100 1 dm⁻² min⁻¹, in particular 10 1 dm⁻² min⁻¹, measured under a pressure difference of 500 Pa.

8. The process of claim 1 wherein the woven fabric produced has a basis weight of less than 250 g/m² and a thickness of less than 0.45 mm.

9. The process of claim 1 wherein the woven fabric produced has a breaking strength of more than 250 daN and a breaking extension of more than 22%, both measured on a 5 cm wide strip of the fabric.

10. The process of claim 1 wherein the temperature of the wash is from 40 to 50°C.

11. The process of claim 1 wherein the wash liquor comprises water with or without detergent-active additives.

12. The process of claim 1 wherein the drying temperature is from 140 to 170°C.

13. The process of claim 1 wherein the drying of the washed fabric takes place under such conditions that the dimensions of the fabric, based on its dimensions prior to the washing step, are reduced by from 0 to 1% in the warp and weft directions.

14. The process of claim 2 wherein the overfeed is from 0 to 1% and the widthways contraction from 0 to 1%.

15. The process of claim 1 wherein the fabric has an air permeability of 10 1 dm⁻² min⁻¹, measured under a pressure difference of 500 Pa, and a plain or rip stop construction.

16. The process of claim 1 wherein the fabric has an air permeability below 100 1 dm⁻² min⁻¹, measured under a pressure difference of 500 Pa, and a cross twill construction, a crepe construction or a modified huckaback construction.

17. The use of fabrics produced using the process of claim 1 for airbags.

18. The use of claim 17 wherein the airbag comprises at least one gastight fabric portion, this gastight fabric portion comprising a fabric with a plain weave or a rip stop weave and a set of maximum closeness.

19. The use of claim 17 wherein the airbag comprises at least one gastight fabric portion comprising twisted warp yarns and zero twist weft yarns.

20. The use of claim 17 wherein the airbag comprises a gastight and a gas-releasing fabric portion, the gas-releasing fabric portion comprising twisted warp and weft yarns.

## Revendications

1. Procédé pour la fabrication de tissus constitués sans enduction, à base de fil synthétique, pour un coussin gonflable, comprenant les dispositions suivantes :
a) fabrication d'un tissu à base de fil continu de polyester à haute ténacité, ayant un titre de fibre unitaire de ≤ 5 dtex, un titre de fil dans la plage de 250 à 550 dtex, un retrait thermique à 200°C de moins de 9 % et un retrait à l'ébullition de moins de 2 %,
b) lavage du tissu à des températures de moins de 60°C, et
c) séchage du tissu lavé, à des températures de moins de 170°C, dans des conditions telles que les dimensions du tissu, par rapport aux dimensions du tissu avant le lavage, ne sont pas modifiées ou sont modifiées de moins de 2 % dans le sens de la chaîne et dans le sens de la trame.

2. Procédé selon la revendication 1, caractérisé en ce que le séchage du tissu lavé s'effectue par traitement dans une rame avec une suralimentation de moins de 2 % et un rétrécissement en largeur de moins de 2 %.

3. Procédé selon la revendication 1, caractérisé en ce que le fil de polyester a une résistance à la traction, par rapport à la finesse, de plus de 60 cN/tex, et un allongement à la traction maximale de plus de 15 %.

4. Procédé selon la revendication 1, caractérisé en ce que, dans la fabrication du tissu, on utilise un fil continu de polyester à haute ténacité, non encollé.

5. Procédé selon la revendication 1, caractérisé en ce que, dans la fabrication du tissu, on utilise des fils de chaîne torsadés et des fils de trame torsadés ou non torsadés, à base de fils continus de polyester à haute ténacité.

6. Procédé selon la revendication 5, caractérisé en ce que, dans la fabrication du tissu, on utilise des fils de trame torsadés à base de fils continus de polyester à haute ténacité, la torsion des fils continus de polyester à haute ténacité étant de préférence dans la plage de 80 à 130/m.

7. Procédé selon la revendication 1, caractérisé en ce que les tissus sont fabriqués avec une perméabilité à l'air inférieure à 100 1.dm⁻².min⁻¹, en particulier de 10 1.dm⁻².min⁻¹, mesurée à une différence de pression de 500 Pa.

8. Procédé selon la revendication 1, caractérisé en ce que les tissus sont fabriqués avec un poids par unité de surface de moins de 250 g/m² et une épaisseur de tissu de moins de 0,45 mm.

9. Procédé selon la revendication 1, caractérisé en ce que les tissus sont fabriqués avec une résistance à la traction de plus de 250 daN et un allongement à la traction maximale de plus de 22 %, mesurés l'un et l'autre sur une bande de tissu de 5 cm de largeur.

10. Procédé selon la revendication 1, caractérisé en ce que le lavage du tissu est effectué à des températures de 40 à 50°C.

11. Procédé selon la revendication 1, caractérisé en ce que le lavage du tissu est effectué avec de l'eau qui contient éventuellement des additifs lavants.

12. Procédé selon la revendication 1, caractérisé en ce que le séchage du tissu est effectué à des températures de 140 à 170°C.

13. Procédé selon la revendication 1, caractérisé en ce que le séchage du tissu lavé est effectué dans des conditions telles que les dimensions du tissu, par rapport aux dimensions du tissu avant le lavage, sont diminuées de 0 à 1 % dans le sens de la chaîne et dans le sens de la trame.

14. Procédé selon la revendication 2, caractérisé en ce que le séchage du tissu lavé est effectué dans une rame avec une suralimentation de 0 à 1 % et un rétrécissement en largeur de 0 à 1 %.

15. Procédé selon la revendication 1, caractérisé en ce que le tissu présente une perméabilité à l'air de 10 1.dm⁻².min⁻¹, mesurée à une différence de pression de 500 Pa, et une armure toile ou une armure reps.

16. Procédé selon la revendication 1, caractérisé en ce que le tissu présente une perméabilité à l'air inférieure à 100 1.dm⁻².min⁻¹, mesurée à une différence de pression de 500 Pa, et une armure croisé, une armure crêpe ou un armure oeil-de-perdrix modifiée.

17. Utilisation de tissus qui sont fabriqués selon le procédé conforme à la revendication 1, pour des coussins gonflables.

18. Utilisation selon la revendication 17, caractérisée en ce que dans le coussin gonflable est prévue au moins une partie du tissu étanche aux gaz, cette partie de tissu étanche aux gaz étant constituée d'un tissu à armure toile ou armure reps et contexture du tissu à la densité maximale.

19. Utilisation selon la revendication 17, caractérisée en ce que dans le coussin gonflable est prévue au moins une partie de tissu étanche aux gaz, cette partie de tissu étanche aux gaz étant constituée de fils de chaîne torsadés et de fils de trame non torsadés.

20. Utilisation selon la revendication 17, caractérisée en ce que dans le coussin gonflable sont prévues une partie de tissu étanche aux gaz et une partie de tissu éliminant les gaz, la partie de tissu éliminant les gaz étant constituée de fils de chaîne et de fils de trame torsadés.
